# EUROPÄISCHE PATENTSCHRIFT

(11) **EP 2 438 808 B1**
(45) Veröffentlichungstag und Bekanntmachung des Hinweises auf die Patenterteilung: **03.07.2013**
(21) Anmeldenummer: 11008125.4
(22) Anmeldetag: 07.10.2011
(51) Int. Cl.: H02P 23/00

(54) **Arbeitsgerät mit einem elektrischen Antriebsmotor**
Work device with an electric drive motor
Outil de travail doté d'un moteur d'entraînement électrique

(30) Priorität: 08.10.2010 DE 102010047761
(43) Veröffentlichungstag der Anmeldung: 11.04.2012
(60) Teilanmeldung: 13002634.7
(73) Patentinhaber: Andreas Stihl AG & Co. KG, 71336 Waiblingen (DE)
(72) Erfinder: Roßkamp, Heiko, Dr., 73099 Adelberg (DE); Liebhard, Gernot, 71332 Waiblingen (DE); Wichert, René, 73568 Durlangen (DE)
(74) Vertreter: Wasmuth, Rolf

(56) Entgegenhaltungen:
- DE-A1-102006 062 354
- DE-A1-102007 015 991
- US-A- 3 465 224

## Beschreibung

Die Erfindung betrifft ein handgeführtes Arbeitsgerät mit einem elektrischen Antriebsmotor, insbesondere eine elektrische Motorkettensäge nach dem Oberbegriff des Anspruchs 1.

Aus der DE 10 2006 062 354 A1 ist ein handgeführtes Arbeitsgerät am Beispiel einer Motorkettensäge bekannt, deren elektrischer Antriebsmotor eine motorspezifische Kennlinie des aufgenommenen Stroms über der Drehzahl aufweist. Über eine Steuereinheit wird dem elektrischen Antriebsmotor elektrische Energie zugeführt, wobei unterhalb einer gewählten Minimaldrehzahl (Eingriffsdrehzahl n_{E}) der durch den elektrischen Antriebsmotor fließende Strom auf Werte begrenzt wird, die unterhalb der motorspezifischen Kennlinie liegen. Damit soll eine generelle Begrenzung der Stromaufnahme des Elektromotors erfolgen, um wirksame Energieeinsparungen zu erzielen, die gerade im Betrieb eines elektrischen Arbeitsgerätes mit einem Akku von Vorteil sind.

Elektromotoren haben generell eine Motorstrom- bzw. Drehmomentkennlinie, die bei niedrigen Drehzahlen eine hohe Stromaufnahme und bei hohen Drehzahlen eine niedrige Stromaufnahme bzw. Drehmoment zeigt. Da eine hohe Stromaufnahme zu einem hohen, von dem Elektromotor abgegebenen Drehmoment führt, wird ein Benutzer, der ein elektrisches Arbeitsgerät mit einem Werkzeug führt, mit steigender Vorschubkraft eine immer höhere Schnittleistung erzielen. Als Antwort auf eine steigende Vorschubkraft und ein langsamer werdendes Werkzeug (fallende Motordrehzahl) gibt der Elektromotor ein höheres Drehmoment ab, weshalb der Benutzer subjektiv eine höhere Schnittleistung empfindet. Aufgrund des typischen Kennlinienverlaufs des Elektromotors ist es für den Benutzer schwierig, durch Steuerung der Vorschubkraft einen geeigneten Arbeitsbereich mit gutem Wirkungsgrad sicher anzufahren und zu halten.

Der Erfindung liegt die Aufgabe zugrunde, ein Arbeitsgerät mit einem elektrischen Antriebsmotor derart auszubilden, dass ein Benutzer auf einfache Weise einen Arbeitsbereich des Arbeitsgerätes mit gutem Wirkungsgrad anfahren und im Betrieb sicher halten kann.

Diese Aufgabe wird erfindungsgemäß nach den Merkmalen des Anspruchs 1 gelöst.

Nach der angegebenen Lösung ist eine derartige Steuerkennlinie der elektrischen Eingangsleistung ausgebildet, dass in der Leistungskurve der Schnittleistung des Werkzeugs über der Vorschubkraft etwa ein Schnittleistungsplateau ausgebildet ist, dessen rechtes, oberes Ende bei steigender Vorschubkraft in einen abfallenden Kurvenabschnitt übergeht.

Die Auslegung der Steuerkennlinie und die damit erzielte Beeinflussung der Eingangsleistung bzw. des aufgenommenen Stroms des Elektromotors ist genau so vorgesehen, dass die Schnittleistungskurve ein für den Benutzer im Betrieb fühlbares Schnittleistungsplateau ausbildet. Das Schnittleistungsplateau erstreckt sich über eine Bandbreite der Vorschubkraft bei etwa gleichbleibender bis leicht veränderter Schnittleistung.

Nach einer Weiterbildung ist vorgesehen, dass der Kurvenabschnitt bei steigender Vorschubkraft zurückläuft, wobei es zweckmäßig ist, wenn der rücklaufende Kurvenabschnitt eine etwa gleiche Steigung aufweist wie der zum Schnittleistungsplateau ansteigende Kurvenast der Schnittleistungskurve.

Vorteilhaft ist das Schnittleistungsplateau mit geringer Steigung ausgebildet, wobei das Schnittleistungsplateau bevorzugt mit steigender Vorschubkraft abfällt. Der geübte Benutzer wird im Schnitt leicht einen Betriebspunkt auf dem Schnittleistungsplateau finden können, da eine größere Vorschubkraft zu einer signifikant sinkenden Schnittleistung führt. Der Benutzer wird folgerichtig die Vorschubkraft wieder zurücknehmen, so dass der Betriebspunkt auf dem Schnittleistungsplateau bis zu einer Maximalleistung im Bereich des Anfangs des Schnittleistungsplateaus im Übergang zur unveränderten Schnittleistungskurve verlagert wird. Erhöht der Benutzer die Vorschubkraft trotz leicht abfallender Schnittleistung weiter, wandert der Betriebspunkt am Ende des Schnittleistungsplateaus auf dem abfallenden Kurvenabschnitt abwärts oder geht in den rücklaufenden Kurvenabschnitt der eingestellten Leistungskurve über, wodurch die Maschine signifikant an Schnittleistung einbüßt, was zu einer entsprechenden Gegenreaktion des Benutzers führt. Der rücklaufende Kurvenabschnitt hat zweckmäßig etwa eine gleiche Steigung wie der zum Schnittleistungsplateau ansteigende Kurvenast der unveränderten Leistungskurve. Durch Absenken der Vorschubkraft führt der Benutzer den Betriebspunkt wieder auf das Schnittleistungsplateau der Schnittkurve zurück, wobei er über die Steuerung der Vorschubkraft jederzeit an das eine oder das andere Ende des Schnittleistungsplateaus fahren kann. In einfacher Weise wird der Benutzer durch die vorgegebene Steuerkennlinie der Steuereinheit zu einem Betrieb des Arbeitsgerätes im Bereich des Schnittleistungsplateaus angehalten, welches zu einer optimalen Schnittleistung führt.

Ein vorgegebenes Drehzahlband des Arbeitsbereichs eines Werkzeugs liegt in einer Bandbreite von 500 bis 2.000 Umdrehungen/Minute, vorzugsweise um 1.000 Umdrehungen/Minute, wobei ein an das obere Drehzahlende des vorgegebenen Drehzahlbandes anschließender Kennlinienabschnitt über ein schmales Drehzahlband von wenigen Hundert Umdrehungen/Minute steil gegen Null abfällt. Vorzugsweise umfasst das schmale Drehzahlband etwa 200 Umdrehungen/Minute. Die Steilheit des Kennlinienabschnittes führt beim Anschnitt mit Hüchstdrehzahl rasch zu einem hohen Drehmoment und entsprechend hoher Schnittleistung, so dass ein Betriebspunkt im Bereich des Schnittleistungsplateaus schnell und sicher angefahren werden kann. Die Ausgangsdrehzahl zum Werkzeug kann die Drehzahl eines das Werkzeug direkt antreibenden Elektromotors sein oder auch die Drehzahl einer Getriebeausgangswelle, die das Werkzeug in angepasster Weise antreibt.

Es kann zweckmäßig sein, die Steuerkennlinie am oberen Ende des vorgegebenen Drehzahlbandes derart zu gestalten, dass die Drehmomentkurve über einen Teilabschnitt auf der motorspezifischen Kennlinie verläuft. Die Steuerkennlinie weist im Bereich des oberen Endes des vorgegebenen Drehzahlbandes im Übergang zu einem Kurvenabschnitt mit negativer Steigung einen Peak auf, der einen optimalen Betriebspunkt maximaler Leistung kennzeichnet.

Darüber hinaus ist aufgrund des Betriebs des Arbeitsgerätes mit einem Betriebspunkt im Bereich des Schnittleistungsplateaus gewährleistet, dass die Drehzahl des Antriebsmotors jederzeit in einem Bereich liegt, der eine ausreichende Kühlung des Antriebsmotors sicherstellt. Der Benutzer fährt das Arbeitsgerät somit nicht nur in einem optimalen Schnittleistungsbereich, sondern auch in einem thermisch ausgeglichenen Betriebsbereich nahe der thermischen Dauerleistungsgrenze, was eine thermische Schädigung der elektrischen Antriebseinheit auch bei Dauerbetrieb ausschließt. Vorteilhaft ist die im Dauerbetrieb aufgenommene elektrische Eingangsleistung des Antriebsmotors auf etwa 25% über der durch die thermische Dauerleistungsgrenze bestimmten Eingangsleistung eingestellt.

Der elektrische Wirkungsgrad des Antriebsmotors ist im Arbeitsbereich vorteilhaft derart eingestellt, dass er größer als 75% des maximalen Wirkungsgrades des Elektromotors ist.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in schematischer Darstellung ein Arbeitsgerät mit von einem elektrischen Antriebsmotor angetriebenen Werkzeug am Beispiel einer Motorkettensäge,
- Fig. 2: ein Schaubild zum Verlauf der elektrischen Eingangsleistung sowie des Strom-/Drehmomentverlaufes über der Drehzahl,
- Fig. 3: in vergrößerter Darstellung ein Detail III des Schaubildes aus Fig. 2,
- Fig. 4: ein Schnittleistungsdiagramm eines elektrisch angetriebenen Werkzeugs am Beispiel der Sägekette einer Motorkettensäge;
- Fig. 5: ein Schaubild des Wirkungsgrades des elektrischen Motors über der Drehzahl;
- Fig. 6: eine Leistungskurve der über der Drehzahl am Werkzeug abgegebenen mechanischen Leistung.

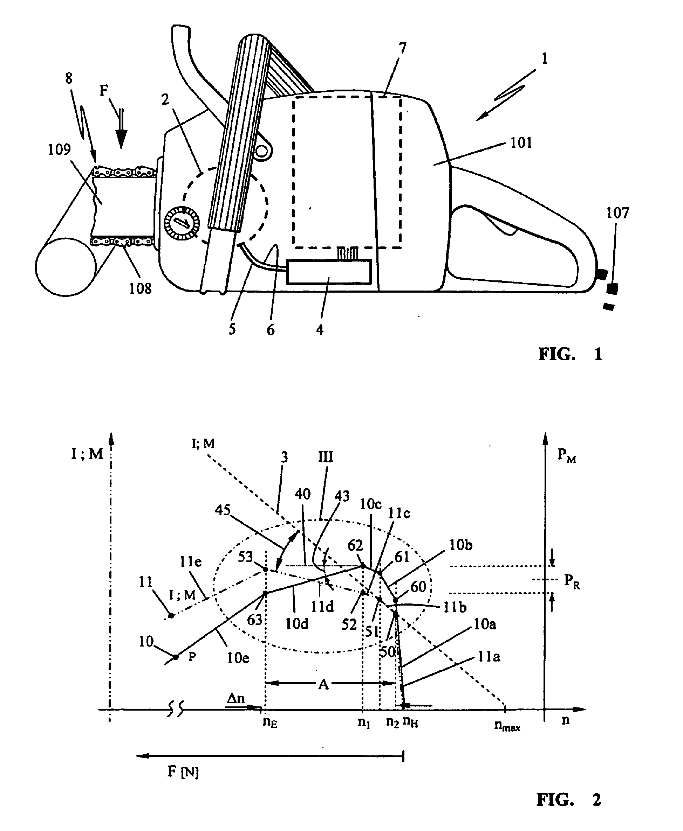

Die Erfindung betrifft allgemein ein elektrisches, handgeführte Arbeitsgerät 1 mit einem angetriebenen Werkzeug 8. In Fig. 1 ist als Ausführungsbeispiel eines derartigen elektrischen Arbeitsgerätes 1 eine Motorkettensäge 101 gezeigt, deren elektrischer Antriebsmotor 2 das Werkzeug 8 - im Ausführungsbeispiel eine Sägekette 108 - mit einer motorspezifischen Kennlinie 3 (Fig. 2) des aufgenommenen Motorstroms I über der Drehzahl n antreibt. Diese motorspezifische Kennlinie 3 gibt zugleich etwa den charakteristischen Verlauf des vom elektrischen Antriebsmotor 2 abgegebenen Drehmomentes M über der Drehzahl n wieder. Dabei geht bei maximaler Leerlaufdrehzahl nₘₐₓ das Drehmoment M an der Ausgangswelle gegen Null, während der Strom I auf einen zugeordneten Leerlaufstrom abfällt. Im Folgenden soll die Kennlinie 3 näherungsweise sowohl den Motorstrom I über der Drehzahl n als auch das Drehmoment M über der Drehzahl n wiedergeben. Die Kennlinie 3 ist im Ausführungsbeispiel im Wesentlichen linear dargestellt; andere Kennlinienverläufe können zweckmäßig sein.

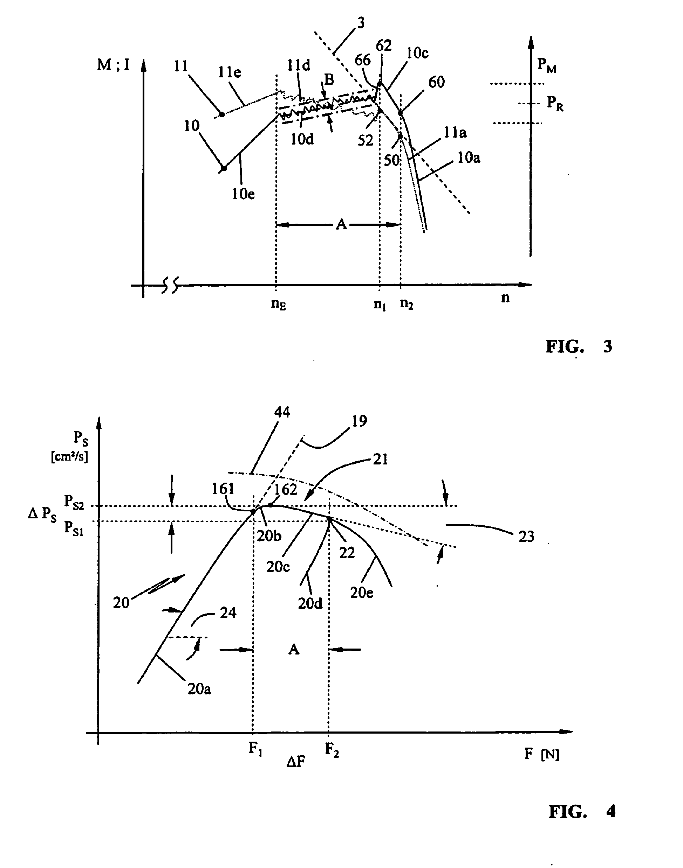

Das tragbare, handgeführte Arbeitsgerät 1 kann auch als Heckenschere, Trennschleifer, Freischneider, Kantenschneider, Hochentaster, Sprühgerät, Blas- oder Sauggerät, Erdbohrgerät, Kombimotorgerät für multifunktionelle Vorsätze, Kehrgerät, Motorhacke, Bodenfräse, Rasenmäher, Vertikutierer, Häcksler, Nass- oder Trockensauger, Olivenschüttler oder dgl. elektrisches Arbeitsgerät 1 mit einem Werkzeug 8 sein. Wesentlich ist ein vom elektrischen Antriebsmotor 2 angetriebenes Werkzeug 8, das im Arbeitseinsatz vom Benutzer mit einer Vorschubkraft F belastet wird, um eine gewünschte Arbeitsleistung zu erzielen. Durch die Vorschubkraft F und die am Werkzeug 8 erbrachte Leistung Pₛ (Fig. 4) sinkt die Drehzahl n des Antriebsmotors 2, was auf der motorspezifischen Kennlinie 3 systembedingt zu einem größeren Motorstrom I und damit zu einem höheren Drehmoment M führen würde.

Der elektrische Antriebsmotor 2 des Arbeitsgerätes 1 nach Fig. 1 ist über eine elektronische Steuereinheit 4 angesteuert, wozu die elektronische Steuereinheit 4 einerseits mit einer energiezuführenden Leitung 5 und andererseits mit einer Signalleitung 6 mit dem elektrischen Antriebsmotor 2 verbunden ist. Über die Signalleitung 6 werden Steuerungssignale aufgegeben bzw. die Drehzahl n des elektrischen Antriebsmotors 2 der Steuereinheit 4 übermittelt. Der elektrische Antriebsmotor 2 ist bevorzugt ein bürstenloser Gleichstrommotor (EC-Motor) und ist über die Steuereinheit 4 in an sich bekannter Weise elektronisch kommutiert.

Im gezeigten Ausführungsbeispiel ist die elektrische Energie zum Betrieb des Antriebsmotors 2 durch einen Akkupack 7 zur Verfügung gestellt, der im gezeigten Ausführungsbeispiel aus auf Lithium basierenden Einzelzellen mit einer Zellspannung zwischen 2 Volt und 5 Volt aufgebaut ist. So sind zweckmäßig LiIo-Zellen (Lithium-Ionen-Zellen), LiPo-Zellen (Lithium-Polymer-Zellen), LiFePo4-Zellen (Lithium-Eisen-Phosphat-Zellen), Lithium-Titanat-Zellen oder dgl. Zellen in Reihen- und/oder Parallelschaltung verwendet. Der Akkupack 7 kann auch aus NiCd-Zellen (Nickel-Cadmium-Zellen), NiMh-Zellen (Nickel-Metallhydrid-Zellen) oder dgl. Zellen aufgebaut sein. Anstelle einer elektrischen Versorgung des Antriebsmotors 2 aus einem Akkupack geeigneten Aufbaus kann der elektrische Antriebsmotor 2 auch über die Steuereinheit 4 und ein Versorgungskabel 107 direkt aus einem elektrischen Versorgungsnetz gespeist werden.

Charakteristisch für einen elektrischen Antriebsmotor 2 ist der Verlauf der motorspezifischen Kennlinie 3 in Fig. 2; bei hoher Drehzahl nₘₐₓ (Leerlaufdrehzahl) ist der aufgenommene Motorstrom I bzw. das abgegebene Drehmoment M des elektrischen Antriebsmotors 2 gering. Wird durch Belastung des angetriebenen Arbeitswerkzeugs 8 - zum Beispiel durch Aufbringen einer Vorschubkraft F - das vom Antriebsmotor 2 angetriebene Arbeitswerkzeug 8 abgebremst, im gezeigten Ausführungsbeispiel eine auf einer Führungsschiene 109 umlaufende Sägekette 108, sinkt die Drehzahl n des antreibenden Antriebsmotors 2 mit der Folge, dass der aufgenommene Motorstrom I bzw. das Motordrehmoment M ansteigt. Als Werkzeug 8 ist insbesondere ein Schneidwerkzeug vorgesehen, so z. B. eine über ein Kettenrad angetriebene Sägekette 108 bei einer Motorkettensäge, eine Trennscheibe bei einem Trennschleifer, ein Messerblatt bei einem Freischneider usw..

Um einen zu großen Stromanstieg bei niedrigen Drehzahlen n zu vermeiden, wird unterhalb einer Eingriffsdrehzahl n_{E} durch die Steuereinheit 4 der Strom I abweichend vom Verlauf der motorspezifischen Kennlinie 3 reduziert. Dadurch ist der durch den elektrischen Antriebsmotor 2 fließende Strom I auf Größen begrenzt, die unterhalb der motorspezifischen Kennlinie 3 liegen. Die Steuerung des Stroms I kann durch eine Veränderung der Motorversorgungsspannung erfolgen.

In einem Arbeitsbereich A (Fig. 2, 3) oberhalb der Eingriffsdrehzahl n_{E} wird von der Steuereinheit 4 eine Steuerkennlinie 10 vorgegeben, durch die die elektrische Eingangsleistung P_{M} des elektrischen Antriebsmotor 2 in einem vorgegebenen Drehzahlband Δn auf eine etwa gleiche oder leicht fallende mittlere Eingangsleistung P_{R} reduziert ist. Dabei ist die Steuerkennlinie 10 im Drehzahlband Δn mit einem Kennlinienabschnitt 10d so gestaltet, dass im vorgegebenen Drehzahlband Δn des Arbeitsbereichs A bei sinkender Drehzahl n die Drehmomentkurve 11 in einem Kurvenabschnitt 11 d über der Drehzahl n ansteigt. Diese Gestaltung der Drehmomentkurve 11 im Bereich des Drehzahlbandes Δn des Arbeitsbereichs A erfolgt vorteilhaft über eine Veränderung des Motorstroms I. Dabei wird innerhalb des Drehzahlbandes Δn des Arbeitsbereiches A bei fallender Drehzahl n eine Steigerung des Drehmomentes M um etwa 5% eingestellt. Zweckmäßig kann die Steigung des Kennlinienabschnitts 11 d der Drehmomentkurve 11 bis auf die Größe der Steigung der motorspezifischen Kennlinie 3 gewählt werden, also über einen Steigungsbereich des Winkels 45 in Fig. 2, der zwischen dem Kennlinienabschnitt 11d und der Kennlinie 3 liegt.

Wird im Drehzahlband Δn des Arbeitsbereiches A eine abfallende Eingangsleistung P_{M} des elektrischen Antriebsmotors 2 vorgesehen, so ist die Auslegung zweckmäßig so getroffen, dass die elektrische Eingangsleistung P_{M} ausgehend von einem Maximalwert um etwa 15% bis 30%, vorzugsweise etwa 18% abfällt. Der bei sinkender Drehzahl n abfallende Kurvenabschnitt 10d der Steuerkennlinie 10 hat vorteilhaft einen Steigungswinkel 43.

Das Drehzahlband Δn des Arbeitsbereiches A liegt im Bereich der Eingriffsdrehzahl n_{E} bis zu einer Höchstdrehzahl n_{H}; zweckmäßig ist das Drehzahlband Δn durch den Drehzahlabstand zwischen der Eingriffsdrehzahl n_{E} und einer Drehzahl n₂ bestimmt. Die Drehzahl n₂ ist durch einen Kurvenpunkt 60 der Steuerkennlinie 10 definiert, ab dem die Steuerkennlinie 10 steil abfällt bzw. die Drehmomentkurve 11 von der motorspezifischen Kennlinie 3 abknickt und steil nach unten gegen Null abfällt.

Das Drehzahlband Δn des Arbeitsbereiches A liegt oberhalb einer Motordrehzahl n von etwa 50%, vorteilhaft oberhalb von 60% der maximalen Leerlaufdrehzahl nₘₐₓ. Ein Drehzahlband des Arbeitsbereichs des angetriebenen Werkzeugs weist vorzugsweise eine Bandbreite von 500 bis 2.000 Umdrehungen/Minute auf, insbesondere 1.000 Umdrehungen/Minute. Dabei ist die Drehzahl zweckmäßig auf das Werkzeug 8 bezogen, so z. B. auf ein die Sägekette 108 antreibendes Kettenrad oder die eine Trennscheibe tragende Welle eines Trennschleifers. Die Steuerkennlinie 10 bzw. die Drehmomentkurve M ist derart ausgelegt, dass eine Höchstdrehzahl n_{H} des Antriebsmotors 2 auf einen Wert unterhalb der Maximaldrehzahl nₘₐₓ der motorspezifischen Kennlinie 3 begrenzt ist. Ausgehend von dieser Höchstdrehzahl n_{H} des Antriebsmotors 2 ist die Steuerkennlinie 10 so gestaltet, das das Drehmoment M (Motorstrom I) einen ersten Kennlinienabschnitt 11 a aufweist, der von n_{H} steil nach oben bis auf einen Kurvenpunkt 50 auf der motorspezifischen Kennlinie 3 verläuft. Der Anstieg des Kurvenabschnitts 11 a ist über einen schmalen Drehzahlbereich n_{H}-n₂ von wenigen Hundert Umdrehungen/Minute ausgebildet; vorzugsweise erstreckt sich der Drehzahlbereich n_{H}-n₂ über 200 bis 300 Umdrehungen/Minute. Von einer niedrigen Drehzahl n kommend fällt der Kennlinienabschnitt 11 a steil gegen Null auf einen Minimalwert ab.

Vom steilen Kennlinienabschnitt 11a kommend, verläuft die Drehmomentkurve 11 vom Kurvenpunkt 50 auf der motorspezifischen Kennlinie 3 bis zu einem Kurvenpunkt 51, um dann mit geringerer Steigung von der Kennlinie 3 abweichend zu einem Kurvenpunkt 52 in dem Drehzahlband Δn des Arbeitsbereiches A zu verlaufen.

Entsprechend verläuft die Steuerkennlinie 10 der elektrischen Eingangsleistung P_{M} bei sinkender Drehzahl n von einer minimalen Eingangsleistung längs eines Kurvenabschnitts 10a steil aufwärts auf einen Kurvenpunkt 60 oberhalb des Kurvenpunktes 50 der Drehmomentkurve M. Der mit geringerer Steigung anschließende Kurvenabschnitt 10b der Steuerkennlinie 10 gewährleistet, dass die Drehmomentkurve M mit einem Kurvenabschnitt 11b auf der Kennlinie 3 verläuft, um dann ausgehend vom Kurvenpunkt 61 aufgrund der längs des Kennlinienabschnittes 10c weiter reduzierter Eingangsleistung P_{M} ein Abweichen der Drehmomentkurve M in dem Kennlinienabschnitt 11c unterhalb der Kennlinie 3 zu erzwingen. Der Kurvenabschnitt 10c steigt bis zu einem Kurvenpunkt 62 höchster Eingangsleistung P_{M} an, um dann gemäß der vorgegebenen Steuerkennlinie 10 längs des Kurvenabschnitts 10d etwa gleich zu bleiben (punktierte Linie 40) oder auf einen Minimalwert 63 abzufallen. Die Auslegung ist so getroffen, dass trotz gleichbleibender oder abfallender Eingangsleistung P_{M} innerhalb des Drehzahlbandes Δn des Arbeitsbereiches A das Drehmoment M längs des Kurvenabschnitts 11d bis auf einen Mamimalwert 53 ansteigt. Der Anstieg des Drehmomentes M ergibt sich trotz sinkender Eingangsleistung P_{M} durch die abfallende Drehzahl n, wobei zur Steuerung der Eingangsleistung P_{M} die Steuereinheit 4 den Strom I nur moderat zurückfährt, so dass der Benutzer im Arbeitsbereich A (Eingriffsdrehzahl n_{E}) keinen wesentlichen Leistungseinbruch feststellt. Am unteren Ende des Drehzahlbandes Δn des Arbeitsbereiches A erfolgt eine einfache Strombegrenzung, so dass Drehmoment M (bzw. der Strom I) und die Leistung P_{M} den jeweiligen abfallenden Kurvenabschnitten 10e und 11e folgen.

In Fig. 3 ist das Drehzahlband Δn des Arbeitsbereiches A in den jeweiligen Übergängen detaillierter dargestellt. Gleiche Kurvenabschnitte und Kurvenpunkte sind mit gleichen Bezugszeichen versehen. Wie anhand des Verlaufs der Steuerkennlinie 10 der Eingangsleistung P_{M} über der Drehzahl n ersichtlich, geht der Kennlinienabschnitt 10c in den Kurvenabschnitt 10d im Drehzahlband Δn mit einem Peak 66 über, der das Maximum der Eingangsleistung P_{M} bildet (Kurvenpunkt 62). Im Bereich des vorgegebenen Drehzahlbandes Δn ist der Kurvenabschnitt 10d der Steuerkennlinie 10 derart ausgebildet, dass über das Drehzahlband Δn eine etwa gleiche oder leicht schwankende mittlere Leistung P_{R} eingestellt ist. Dabei kann eine Schwankung der Eingangsleistung um die mittlere Leistung P_{R} von ± 15% zugelassen sein, vorzugsweise von weniger als ± 10%. Dadurch ergibt sich eine Bandbreite B der mittleren Leistung P_{R}. Ist der Kurvenabschnitt 10d der Steuerkennlinie 10 fallend ausgebildet, so fällt die mittlere aufgenommene elektrische Leistung bei fallender Drehzahl n von einem Maximalwert im Kurvenpunkt 62 auf einen Minimalwert im Kurvenpunkt 63 ab. Dabei beträgt die Eingangsleistung P_{M} im Kurvenpunkt 63 etwa 80% bis 95% der Eingangsleistung P_{M} im Kurvenpunkt 62.

Die so gestaltete Steuerkennlinie 10 führt zu einer besonderen Form der Leistungskurve 20 der Schnittleistung P_{S} über der Vorschubkraft F, wie sie in Fig. 4 dargestellt ist. Die Schnittleistungskurve 20 eines von einem Elektromotor 2 angetriebenen Arbeitswerkzeugs 8 würde theoretisch längs der gestrichelten Kennlinie 19 stetig ansteigen. Dabei wird die Schnittleistung P_{S} mit steigender Vorschubkraft F stetig größer. Ein fühlbarer Arbeitsbereich kann vom Benutzer nicht festgestellt werden.

Durch die Ausbildung der Steuerkennlinie 10 gemäß den Figuren 2 und 3 im Drehzahlband Δn des Arbeitsbereichs A wird die Schnittleistungskurve 20 derart verändert, dass ein über der Vorschubkraft F liegendes Schnittleistungsplateau 21 ausgebildet ist, dessen eines Ende 22 bei steigender Vorschubkraft F in einen abfallenden Kurvenabschnitt 20e übergeht. Es kann vorteilhaft sein, den abfallenden Kurvenabschnitt 20e als rücklaufenden Kurvenabschnitt 20d auszubilden.

Die Kurvenbereiche 20b und 20c der gestalteten Schnittleistungskurve 20 definieren in etwa das Schnittleistungsplateau 21 des Arbeitsbereichs A, das vom Benutzer durch Aufbringen der Vorschubkraft F fühlbar angefahren und leicht gehalten werden kann.

Wird das Arbeitsgerät 1, z. B. eine Motorkettensäge 101 in Betrieb genommen, läuft das Werkzeug 8, nämlich die Sägekette 108 zunächst mit einer durch die Steuerkennlinie 10 vorgeprägten Höchstdrehzahl n_{H}. Mit Belastung des angetriebenen Werkzeugs 8 durch Aufbringen einer Vorschubkraft F steigt die elektrische Eingangsleistung P_{M} aufgrund des steilen Kennlinienabschnitts 10a steil an; dies entspricht der ansteigenden Schnittleistung im ansteigenden Kurvenast 20a der unveränderten Schnittleistungskurve 20 (Fig. 4). Bei weiterer Erhöhung der Vorschubkraft F fällt die Drehzahl von n₂ auf n₁ weiter ab, wobei die Steuerkennlinie 10 die Kennlinienabschnitte 10b und 10c durchläuft, wobei die Drehmomentkurve 11 zunächst auf der motorspezifischen Kennlinie 3 liegt. Im Bereich der Drehzahl n₁ ist die maximale Eingangsleistung P_{M} (Peak 66) erreicht; die Schnittleistungskurve 20 hat im Punkt 162 die maximale Schnittleistung P_{S2} erreicht. Der erste Knickpunkt 161 der Schnittleistungskurve 20 vom Kurvenabschnitt 20a zum Kurvenabschnitt 20b aufwärts zum Punkt 162 der maximalen Schnittleistung P_{S2} (Peak 66) entspricht im Schaubild nach Fig. 2 dem Kurvenpunkt 62 der Eingangsleistung P_{M}. Mit steigender Vorschubkraft F bis zu F₂ nimmt im Schaubild nach Fig. 2 die aufgenommene elektrische Eingangsleistung P_{M} über der sinkenden Drehzahl n₁ bis n_{E} ab - oder bleibt gemäß der punktierten Linie 40 gleich -, während die Drehzahl n abfällt. Aufgrund der sinkenden Drehzahl n und der moderaten Reduzierung der elektrischen Eingangsleistung P_{M} im Drehzahlband Δn steigt gleichzeitig das Drehmoment M des Motors 2 über der fallenden Drehzahl n an, wodurch im Schnittleistungsdiagram (Fig. 4) das Schnittleistungsplateau 21 ausgebildet ist. Im Bereich des Schnittleistungsplateaus 21 ändert sich die Schnittleistung P_{S} in einer nur engen Bandbreite ΔP_{S}. Das Schnittleistungsplateau 21 fällt mit einem geringen Winkel 23 von wenigen Grad ab.

Erhöht der Benutzer die Vorschubkraft F weiter (Fig. 2), so dass die Drehzahl n unter die Eingriffsdrehzahl n_{E} fällt, verläuft die Steuerkennlinie 10 im Kurvenast 10e stark abfallend, wodurch dann auch das vom Elektromotor 2 abgegebene Drehmoment M einbricht. Im Schnittleistungsdiagramm (Fig. 4) wandert der Betriebspunkt auf den abfallenden Kurvenabschnitt 20e bzw. den rücklaufenden Kurvenabschnitt 20d, was der Benutzer durch einen starken Einbruch der Schnittleistung P_{S} feststellt. Mit Rücknahme der Vorschubkraft F verschiebt sich der Betriebspunkt wieder zurück in den Bereich des Schnittleistungsplateaus 21 bei optimaler Schnittleistung P_{S}. Dies entspricht einem Betrieb im Drehzahlband Δn des Arbeitsbereichs A (Fig. 2).

Bei einer Motorkettensäge wird ein Anschnitt bei Höchstdrehzahl n_{H} begonnen und dann die Vorschubkraft F erhöht, wobei mit steigender Vorschubkraft der Betriebspunkt der Motorkettensäge über den ansteigenden Kurvenast 20a der Schnittleistungskurve 20 (Fig. 4) hoch auf eine maximale Schnittleistung P_{S2} läuft. In dem Punkt 162 ist die höchste Schnittleistung Ps auf dem höchsten Punkt des das Schnittleistungsplateaus 21 erreicht. Wird die Vorschubkraft von F₁ auf F₂ weiter erhöht, bewegt sich der Betriebspunkt im Arbeitsbereich A im Bereich des Schnittleistungsplateaus 21. Wird eine Vorschubkraft F aufgebracht, die deutlich größer als die maximale Vorschubkraft F₂ am Ende des Schnittleistungsplateaus 21 ist, läuft der Betriebspunkt in den abfallenden Kurvenabschnitt 20e bzw. 20d mit stark abfallender Schnittleistung P_{S}. Der rücklaufende Kurvenabschnitt 20d weist etwa eine gleiche Steigung auf, wie der zum Schnittleistungsplateau 21 ansteigende Kurvenast 20a der Schnittleistungskurve 20.

Bevorzugt ist das Schnittleistungsplateau 21 mit geringer Steigung 23 ausgebildet, wobei die Steigung 23 derart gewählt ist, dass sie bei steigender Vorschubkraft F abfällt. Dies hat zur Folge, dass bei Erhöhen der Vorschubkraft der Benutzer bei Übergang des Betriebspunktes auf den abfallenden Kurvenabschnitt einen deutlichen Abfall der Schnittleistung P_{S} feststellt und somit das Ende des Arbeitsbereiches im Bereich des Endes 22 des Kurvenabschnittes 20c ertasten bzw. fühlen kann. Nimmt er die Vorschubkraft F zurück, steigt die Schnittleistung auf dem Schnittleistungsplateau 21 bis zum Maximalpunkt 162 wieder an, so dass der Benutzer durch Wahl der Vorschubkraft F das Arbeitsgerät in einfacher Weise in einem optimalen Arbeitsbereich A betreiben kann.

Die Gestaltung der Steuerkennlinie 10 gemäß den Figuren 2 und 3 bedingt die Ausformung der Schnittleistungskurve 20 gemäß Fig. 4. Eine derartig gestaltete Schnittleistungskurve ergibt sich bei einem Antrieb eines Werkzeugs, insbesondere eines Schneidwerkzeugs durch einen elektrischen Antriebsmotors 2 auf einer motorspezifischen Kennlinie nicht.

Die Auslegung der Steuerkennlinie 10 erfolgt so, dass im Arbeitsbereich A die Drehzahl des Elektromotors in einem Bereich liegt, der auch unter Last eine ausreichende Kühlung des elektrischen Antriebsmotors 2 gewährleistet. Die Gestaltung der Schnittleistungskurve gemäß Fig. 4 hält den Benutzer dazu an, zur Erzielung einer maximalen Schnittleistung P_{S} den Betriebspunkt im Bereich des Schnittleistungsplateaus 21 zu wählen, was eine Drehzahl im Bereich zwischen n_{E} und n₂ (Fig. 2) gewährleistet, bei der eine thermische Überlast des elektrischen Antriebsmotors sicher ausgeschlossen werden kann. Das ausgebildete Schnittleistungsplateau 21 liegt unterhalb einer Dauerleistungsgrenze 44 eines thermischen Überlastbereichs.

Die Steuereinheit 4 erzwingt die erfindungsgemäße Steuerkennlinie 10, wobei im Arbeitsbereich A der bei sinkender Drehzahl n abfallende Kurvenabschnitt zwischen n₁ und n_{E} auf eine mittlere Eingangsleistung P zurückgeführt ist.

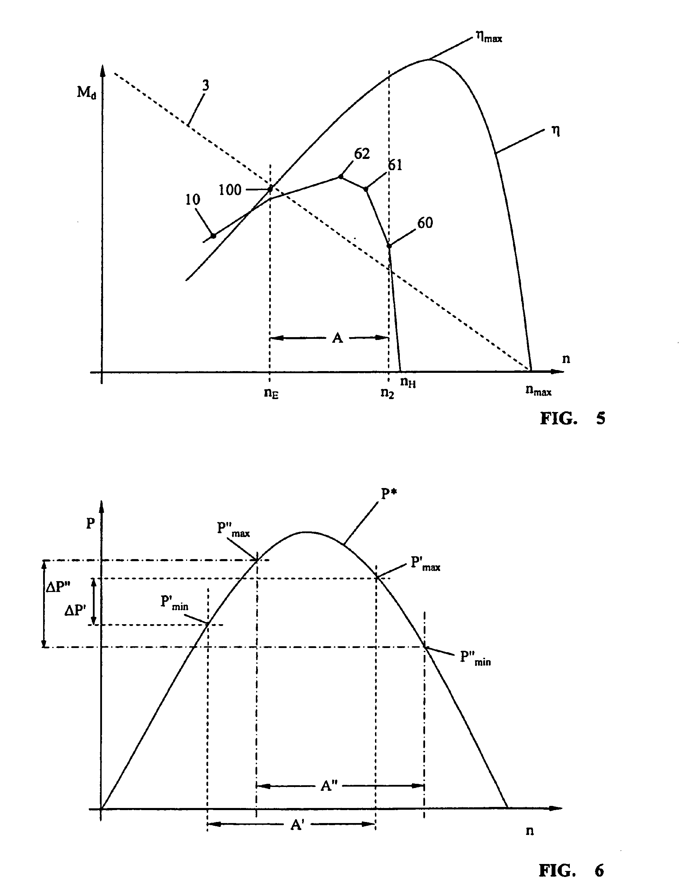

In Fig. 5 ist der Wirkungsgrad η dargestellt, der über der Drehzahl n bis zu einem Maximum ηₘₐₓ ansteigt, um dann bis auf ein Drehmoment M gegen Null bei einer Maximaldrehzahl nₘₐₓ abzufallen.

In Fig. 5 ist die Steuerkennlinie 10 mit den Kurvenpunkten 60, 61 und 62 eingezeichnet, wobei der Arbeitsbereich A zwischen der Eingriffsdrehzahl n_{E} und einer oberen Drehzahl n₂ liegt. Das Drehzahlband Δn des Arbeitsbereiches A bestimmt sich aus der Differenz der oberen Drehzahl n₂ und der Eingriffsdrehzahl n_{E}, also n₂-n_{E}.

Im Bereich der Eingriffsdrehzahl n_{E} liegt der Motorwirkungsgrad im Punkt 100 bei etwa 75% bis 78% des maximalen Wirkungsgrades ηₘₐₓ und steigt im Arbeitsbereich A mit steigender Drehzahl n an. Der Anstieg des Wirkungsgrades η innerhalb des Arbeitsbereiches A ist bis nahe an den maximalen Wirkungsgrad ηₘₐₓ möglich; zweckmäßig wird im Arbeitsbereich A ein Wirkungsgrad η von bis zu 95% des maximalen Wirkungsgrades ηₘₐₓ erzielt.

Im Ausführungsbeispiel nach Fig. 6 ist schematisch eine Leistungskurve P* wiedergeben. In dieser Leistungskurve P* ist z. B. ein Arbeitsbereich A' bzw. A" gewählt, wobei jeder Arbeitsbereich durch eine minimale Leistung P'ₘᵢₙ bzw. P"ₘᵢₙ bzw. eine maximale Leistung P'ₘₐₓ bzw. P"ₘₐₓ gekennzeichnet ist.

Wird die Steuerkennlinie 10 (Fig. 2) im Arbeitsbereich A auf eine etwa gleiche mittlere Leistung P_{R} eingestellt, dann wird diese gleiche mittlere Leistung P_{R} so gewählt, dass sie der natürlichen minimalen Leistung der natürlichen Leistungskurve P* entspricht. D. h., dass in einem Arbeitsbereich A' die einzustellende mittlere Leistung P_{R} der minimalen Leistung P'ₘᵢₙ der natürlichen Leistungskurve P* entspricht; ist ein Arbeitsbereich A" vorgesehen, wird die einzustellende gleiche mittlere Leistung P_{R} auf die minimale Leistung P"ₘᵢₙ des Arbeitsbereiches A" festgelegt. Abhängig von der Lage des Arbeitsbereiches kann die minimale Leistung Pₘᵢₙ sowohl auf dem aufsteigenden als auch auf dem absteigenden Kurvenast der natürlichen Leistungskurve P* liegen.

Nach der Erfindung treibt der Antriebsmotor 1 ein Werkzeug an, insbesondere ein Schneidwerkzeug. Ist das Arbeitsgerät 1 als Motorkettensäge ausgebildet, ist das Schneidwerkzeug eine Sägekette. Der elektrische Antriebsmotor 1 des Arbeitsgerätes wird allgemein von einem Akkupack gespeist, d. h., mit elektrischer Energie versorgt.

## Patentansprüche

1. Handgeführtes Arbeitsgerät mit einem elektrischen Antriebsmotor (1), insbesondere elektrische Motorkettensäge (101), wobei der elektrische Antriebsmotor (2) eine motorspezifische Kennlinie (3) des aufgenommenen Motorstroms (I) über der Drehzahl (n) des Motors (2) aufweist, und mit einer Steuereinheit (4), über die die dem elektrischen Antriebsmotor (2) zugerührte elektrische Energie gesteuert ist, wobei die Steuereinheit (4) unterhalb einer Eingriffsdrehzahl (n_{E}) den durch den elektrischen Antriebsmotor (2) fließenden Strom (I) auf Werte begrenzt, die unterhalb der motorspezifischen Kennlinie (3) liegen, ,
**dadurch gekennzeichnet, dass** eine vorgegebene Steuerkennlinie (10) der elektrischen Eingangsleistung (P_{M}) derart ausgelegt ist, dass in einer Leistungskurve (20) der Schnittleistung (P_{S}) eines Werkzeugs (8) über der Vorschubkraft (F) ein Schnittleistungsplateau (21) ausgebildet ist, dessen rechtes, oberes Ende (22) bei steigender Vorschubkraft (F) in einen abfallenden Kurvenabschnitt (20d, 20e) übergeht.

2. Arbeitsgerät nach Anspruch 1,
**dadurch gekennzeichnet, dass** der abfallende Kurvenabschnitt (20d) bei steigender Vorschubkraft (F) zurückläuft.

3. Arbeitsgerät nach Anspruch 2,
**dadurch gekennzeichnet, dass** der rücklaufende Kurvenabschnitt (20d) eine etwa gleiche Steigung (24) aufweist wie der zum Schnittleistungsplateau (21) ansteigende Kurvenast (20a) der Schnittleistungskurve (20).

4. Arbeitsgerät nach Anspruch 1,
**dadurch gekennzeichnet, dass** das Schnittleistungsplateau (21) mit geringer Steigung (23) ausgebildet ist.

5. Arbeitsgerät nach Anspruch 1,
**dadurch gekennzeichnet, dass** das Schnittleistungsplateau (21) bei steigender Vorschubkraft (F) mit negativer Steigung (23) ausgebildet ist.

6. Arbeitsgerät nach einem der Ansprüche 1 bis 5,
**dadurch gekennzeichnet, dass** in einem Arbeitsbereich eine Ausgangsdrehzahl zum Werkzeug (8) in einer Bandbreite von etwa 500 bis 2.000 Umdrehungen/Minute liegt, insbesondere in einer Bandbreite um 1.000 Umdrehungen/Minute.

7. Arbeitsgerät nach einem der Ansprüche 1 bis 6,
**dadurch gekennzeichnet, dass** die Steuerkennlinie (10) einen Kennlinienabschnitt (10a) umfasst, in dem die Drehzahl (n) über ein schmales Drehzahlband (n_{H}-n₂) von wenigen Hundert Umdrehungen/Minute, vorzugsweise 200 Umdrehungen/Minute, gegen Null abfälle.

8. Arbeitsgerät nach Anspruch 7,
**dadurch gekennzeichnet, dass** die Steuerkennlinie (10) einen Kennlinienabschnitt (10b) mit einer derartigen Steigung umfasst, dass die Drehmomentkurve (11) mit einem Kurvenabschnitt (11b) auf der motorspezifischen Kennlinie (3) verläuft, wobei vorzugsweise in dem Bereich des rechten, oberen Endes des vorgegebenen Drehzahlbandes (Δn) der Übergang der Steuerkennlinie (10) in einen abfallenden Kurvenabschnitt einen Peak (66) höchster Leistung aufweist.

9. Arbeitsgerät nach einem der Ansprüche 1 bis 8,
**dadurch gekennzeichnet, dass** die elektrische Eingangsleistung (P) des Antriebsmotors (2) in dem vorgegebenen Drehzahlband (Δn) nahe einer thermischen Dauerleistungsgrenze (44) eingestellt ist.

10. Arbeitsgerät nach Anspruch 9,
**dadurch gekennzeichnet, dass** die im Dauerbetrieb aufgenommene elektrische Eingangsleistung (P_{M}) des Antriebsmotors (2) auf etwa 25% über der durch die thermische Dauerleistungsgrenze (44) bestimmten Eingangsleistung eingestellt ist.

11. Arbeitsgerät nach einem der Ansprüche 1 bis 10,
**dadurch gekennzeichnet, dass** der elektrische Wirkungsgrad (η) des Antriebsmotors (2) im Arbeitsbereich (A) größer als 75% des maximalen Wirkungsgrades (ηₘₐₓ) ist.

12. Arbeitsgerät nach einem der Ansprüche 1 bis 11,
**dadurch gekennzeichnet, dass** die mittlere Leistung (P_{R}) in einer Bandbreite von ± 15% schwankt, vorzugsweise in einer Bandbreite von weniger als ± 10%.

## Claims

1. Hand-operated work device with an electric drive motor (1), in particular an electric motor chain saw (101), wherein the electric drive motor (2) has a motor-specific characteristic line (3) of the motor current (I) consumed over the speed (n) of the motor (2), and with a control unit (4), via which the electrical energy fed to the electric drive motor (2) is controlled, wherein the control unit (4) limits below an engagement speed (n_{E}) the current (I) flowing through the electric drive motor (2) to values lying below the motor-specific characteristic line (3),
**characterised in that** a predefined characteristic control line (10) of the electric input power (P_{M}) is configured so that a cutting power plateau (21) is formed in a power curve (20) of the cutting power (P_{S}) of a tool (8) over the feed force (F), of which cutting power plateau (21) a right, upper end (22) goes into a descending curve segment (20d, 20e) in case of increasing feed force (F).

2. Work device according to claim 1,
**characterised in that** the descending curve segment (20d) runs backwards in case of increasing feed force (F).

3. Work device according to claim 2,
**characterised in that** the backward running curve segment (20d) has an approximately equal gradient (24) to that of the curve segment (20a) of the cutting power curve (20) ascending to the cutting power plateau (21).

4. Work device according to claim 1,
**characterised in that** the cutting power plateau (21) is configured with a low gradient (23).

5. Work device according to claim 1,
**characterised in that** the cutting power plateau (21) is configured with a negative gradient (23) in case of increasing feed force (F).

6. Work device according to one of the claims 1 to 5,
**characterised in that** in a working range an output speed to the tool (8) lies in a range of from approximately 500 to 2000 revolutions/minute, in particular in a range of around 1000 revolutions/minute.

7. Work device according to one of the claims 1 to 6,
**characterised in that** the characteristic control line (10) has a characteristic line segment (10a), in which the speed (n) falls over a narrow speed range (n_{H}-n₂) of a few hundred revolutions / minute, preferably 200 revolutions/minute, towards zero.

8. Work device according to claim 7,
**characterised in that** the characteristic control line (10) has a characteristic line segment (10b) with such a gradient that the torque curve (11) extends with a curve segment (11b) on the motor-specific characteristic line (3), wherein the transition of the characteristic control line (10) into a descending curve segment has a peak (66) of the highest power preferably in the region of the right, upper end of the predefined speed range (Δn).

9. Work device according to one of the claims 1 to 8,
**characterised in that** the electric input power (P) of the drive motor (2) is set in the predefined speed range (Δn) close to a continuous thermal power threshold (44).

10. Work device according to claim 9,
**characterised in that** the electric input power (P_{M}) of the drive motor (2) consumed in continuous operation is set to around 25% over the input power determined through the continuous thermal power threshold (44).

11. Work device according to one of the claims 1 to 10,
**characterised in that** the electrical efficiency level (η) of the drive motor (2) in the working range (A) is greater than 75% of the maximum efficiency level (ηₘₐₓ).

12. Work device according to one of the claims 1 to 11,
**characterised in that** the average power (P_{R}) fluctuates in a range of +/- 15%, preferably in a range of less than +/- 10%.

## Revendications

1. Outil de travail à main avec un moteur d'entraînement électrique (2), en particulier tronçonneuse électrique (101), étant précisé que le moteur d'entraînement électrique (2) présente une courbe caractéristique de moteur (3) du courant de moteur consommé (I) sur la vitesse de rotation (n) du moteur (2), et avec une unité de commande (4) par l'intermédiaire de laquelle l'énergie électrique fournie au moteur d'entraînement électrique (2) est commandée, étant précisé que l'unité de commande (4), au-dessous d'une vitesse de rotation d'action (n_{E}), limite le courant (I) qui traverse le moteur d'entraînement électrique (2) à des valeurs qui sont situées au-dessous de la courbe caractéristique de moteur (3),
**caractérisé en ce qu'**une courbe caractéristique de commande prédéfinie (10) de la puissance d'entrée électrique (P_{M}) est étudiée pour que soit formé, dans une courbe de puissance (20) de la puissance de coupe (P_{S}) d'un outil (8) sur la force d'avance (F), un plateau de puissance de coupe (21) dont l'extrémité supérieure droite (22), avec une force d'avance (F) croissante, se prolonge par une section de courbe descendante (20d, 20e).

2. Outil de travail selon la revendication 1,
**caractérisé en ce que** la section de courbe descendante (20d), quand la force d'avance (F) augmente, redescend.

3. Outil de travail selon la revendication 2,
**caractérisé en ce que** la section de courbe qui redescend (20d) présente une pente (24) à peu près égale à la branche de courbe (20a) de la courbe de puissance de coupe (20) qui monte jusqu'au plateau de puissance de coupe (21).

4. Outil de travail selon la revendication 1,
**caractérisé en ce que** le plateau de puissance de coupe (21) est pourvu d'une pente (23) faible.

5. Outil de travail selon la revendication 1,
**caractérisé en ce que** le plateau de puissance de coupe (21) est pourvu, avec une force d'avance (F) croissante, d'une pente (23) négative.

6. Outil de travail selon l'une des revendications 1 à 5,
**caractérisé en ce que** dans une zone de travail, une vitesse de rotation de départ pour l'outil (8) est située dans une plage d'environ 500 à 2000 tours/minute, en particulier dans une plage de l'ordre de 1000 tours/minute.

7. Outil de travail selon l'une des revendications 1 à 6,
**caractérisé en ce que** la courbe caractéristique de commande (10) comprend une section de courbe caractéristique (10a) dans laquelle la vitesse de rotation (n), sur une étroite plage de vitesse de rotation (n_{H}-n₂) de quelques centaines seulement de tours/minute, de préférence de 200 tours/minute, baisse vers zéro.

8. Outil de travail selon la revendication 7,
**caractérisé en ce que** la courbe caractéristique de commande (10) comprend une section de courbe caractéristique (10b) avec une pente telle que la courbe de couple de rotation (11) s'étend avec une section de courbe (11b) sur la courbe caractéristique de moteur (3), étant précisé que de préférence dans la zone de l'extrémité supérieure droite de la plage de vitesse de rotation prédéfinie (Δn), la transition entre la courbe caractéristique de commande (10) et une section de courbe descendante présente un pic (66) de puissance maximale.

9. Outil de travail selon l'une des revendications 1 à 8,
**caractérisé en ce que** la puissance d'entrée électrique (P) du moteur d'entraînement (2) est réglée dans la plage de vitesse de rotation prédéfinie (Δn) près d'une limite de puissance thermique continue (44).

10. Outil de travail selon la revendication 9,
**caractérisé en ce que** la puissance d'entrée électrique consommée (P_{M}) du moteur d'entraînement (2) en fonctionnement constant est réglée à environ 25% au-dessus de la puissance d'entrée définie par la limite de puissance thermique continue (44).

11. Outil de travail selon l'une des revendications 1 à 10,
**caractérisé en ce que** le rendement électrique (η) du moteur d'entraînement (2) dans la zone de travail (A) est supérieur à 75% du rendement maximal (ηₘₐₓ).

12. Outil de travail selon l'une des revendications 1 à 11,
**caractérisé en ce que** la puissance moyenne (P_{R}) oscille dans une plage de ± 15%, de préférence dans une plage de moins de ± 10%.
